# EUROPÄISCHE PATENTANMELDUNG

(11) **EP 0 934 787 A2**
(43) Veröffentlichungstag der Anmeldung: **11.08.1999**
(21) Anmeldenummer: 99105648.2
(22) Anmeldetag: 10.12.1994
(51) Int. Cl.: B23B 5/16

(54) **Vorrichtung zum lage- und massgenauen Anfasens eines Rohrendes**

(30) Priorität: 11.12.1993 DE 4342325
(62) Teilanmeldung aus: 95902789.7
(71) Anmelder: MASCHINENFABRIK REIKA-WERK GmbH, D-58099 Hagen (DE)
(72) Erfinder: Braun,Hans-Jörg, 58093 Hagen-Berchum (DE); Mohn,Gehard, 51702 Bergneustadt (DE)
(74) Vertreter: Rehders, Jochen

(57) **Zusammenfassung**

Vorrichtung zum mit Bezug auf den Außen- oder Innendurchmesser eines Rohres lage- und maßgenauen Anfasen eines eingespannten Rohrendes, bei dem in einem Schruppbearbeitungsgang mit einem auf den Rohrdurchmesser eingestellten Bearbeitungswerkzeug die Fase bis auf eine Bearbeitungszugabe für einen nachfolgenden Schlichtbearbeitungsgang hergestellt und in einem Schlichtbearbeitungsgang die Fase lage- und maßgenau in Abhängigkeit von dem mittels einer Tastvorrichtung über den Rohrumfang ermittelten Verlauf des Außen- oder Innendurchmessers angebracht wird.

## Beschreibung

Die Erfindung betrifft eine Vorrichtung zum mit Bezug auf den Außen- oder Innendurchmesser eines Rohres lage- und maßgenauen Anfasen eines eingespannten Rohrendes, insbesondere zum Anbringen einer Schweißfase, die in der Regel maßgenau mit Bezug auf die Rohrinnenfläche angebracht werden muß, um eine allen Ansprüchen gerecht werdende Schweißverbindung zwischen aneinanderstoßenden Rohrenden herstellen zu können. Das Herstellen einer solchen Schweißfase ist problematisch, da bei nahtlosen Rohren eine nicht unerhebliche Unrundheit sowie Wanddickenabweichungen durch radialen Versatz des Innendurchmessers gegenüber dem Außendurchmesser auftreten können. Bei geschweißten Rohren tritt zwar keine große Wanddickenabweichung auf, jedoch können diese Rohre eine starke Ovalität und im Bereich der Schweißnaht innen und/oder außen Buckel aufweisen. Auch ist bei nahtlosen und geschweißten Rohren eine Durchmesserabweichung zulässig, die eine genaue Schweißnahtvorbereitung ohne Bezugnahme auf den tatsächlichen Rohrinnen- oder -außendurchmesser nicht gewährleistet.

Die Unrundheit des Rohres läßt sich gemäß der US-Patentschrift 3 724 303, in der eine Vorrichtung zum kombinierten Abstechen und Anfasen von Rohrenden beschrieben ist, dadurch kompensieren, daß das Faswerkzeug an einem Werkzeughalter angeordnet ist, der sich über eine Rolle oder Kugel auf der Rohraußenfläche federnd abstützt. Auf diese Weise lassen sich sowohl eine Außenfase als auch eine Innenfase lage- und maßgenau gegenüber dem Außenumfang des Rohres anbringen. Soll eine Außen- und/oder Innenfase lage- und maßgenau gegenüber der Rohrinnenfläche angebracht werden, muß sich der Werkzeughalter in entsprechender Weise an der Rohrinnenfläche abstützen. Diese bekannte Vorrichtung arbeitet somit nach einem Kopierverfahren mit einer mechanischen Tastvorrichtung, die direkt mit dem Faswerkzeug in Wirkverbindung steht.

Nachteilig bei dieser bekannten Vorrichtung ist, daß sich der Bearbeitungsgang des Anfasens nicht in einen schnellen Schruppbearbeitungsgang und einen langsameren Schlichtbearbeitungsgang unterteilen läßt, so daß der Vorschub für den gesamten Bearbeitungsgang entsprechend dem für die geforderte Oberflächengüte erforderlichen Schlichtbearbeitungsgang bemessen werden muß.

Dadurch wird die Bearbeitungszeit unnötig lang, da nur eine geringe Zerspannungsleistung erreichbar ist. Hinzu kommt noch, daß sich eine unregelmäßige Oberfläche der Fase ergibt, wenn die Kopiervorrichtung über Späne oder einen Schweißnahtbuckel läuft, was die Qualität der anzubringenden Fase beeinträchtigt.

Der Erfindung liegt das Problem zugrunde, eine Vorrichtung zu schaffen, mit der sich ein Rohrende lage- und maßgenau mit Bezug auf den Außen- oder Innendurchmesser des Rohres anfasen läßt und die Fase dabei durch Unrundheiten, Wanddickenabweichungen, Späne oder Schweißnahtbuckel möglichst unbeeinflußt bleibt.

Zur Lösung dieses Problems ist die Vorrichtung zum mit Bezug auf den Außen- oder Innendurchmesser eines Rohres lage- und maßgenauen Anfasen eines eingespannten Rohrendes aus einer Spannvorrichtung für ein Rohrende, einem oder mehreren relativ zur Spannvorrichtung um die Rohrachse drehbaren, radial einstellbaren Faswerkzeug(en), einer relativ zur Spannvorrichtung um die Rohrachse drehbaren Tastvorrichtung zum Ermitteln des Außen- und/oder Innendurchmessers sowie des Verlaufs des Außen- und/oder Innendurchmessers über den Rohrumfang und einer mit der Tastvorrichtung in Wirkverbindung stehenden Steuervorrichtung zum Einstellen des Faswerkzeugs beim lage- und maßgenauen Erstellen der Fase in einem Schlichtbearbeitungsgang in Abhängigkeit vom Verlauf des Außen- oder Innendurchmessers mit einer Spannvorrichtung versehen, die erfindungsgemäß mit einem axial verschiebbaren, Spannbacken radial spannenden Spannkolben und einem damit gekuppelten Weggeber ausgestattet ist, wobei der vom Weggeber aufgenommene Weg des Spannkolbens ein Maß für den Ist-Außendurchmesser ist. Das Messen des Ist-Außendurchmessers des Rohres läßt sich dadurch auf einfache Weise bewerkstelligen. Dabei ist es grundsätzlich ohne Bedeutung, ob das Faswerkzeug und die Tastvorrichtung feststehen und das Rohr mittels einer Spannvorrichtung zum Anfasen gedreht wird oder umgekehrt.

Wenn mit dieser Spannvorrichtung ein dünnwandiges Rohr im wesentlichen kreisrund gedrückt wird, läßt sich der gemessene Ist-Außendurchmesser direkt dazu verwenden, den Schruppbearbeitungsvorgang und den Schlichtbearbeitungsvorgang zu steuern. Eine zusätzliche Tastvorrichtung in Wirkverbindung mit einer Steuervorrichtung zum Einstellen des Faswerkzeugs beim maßgenauen Erstellen der Fase in einem Schlichtbearbeitungsgang in Abhängigkeit vom Verlauf des Außen- oder Innendurchmessers ist dann nicht mehr erforderlich.

In diesem Fall läßt sich das Anbringen der Fase sowohl unter Berücksichtigung des Verlaufs des Ist-Außen- bzw. -Innendurchmessers oder auch nur, besonders bei dünnwandigen, geschweißten Rohren, des gemessenen Ist-Außen- bzw. -Innendurchmessers durchführen, wobei dies sowohl in einem einzigen Arbeitsgang als auch unter Voranschaltung eines Schruppbearbeitungsganges erfolgen kann.

Wegen der großen Rohrlänge und der sich daraus ergebenden großen Masse des Rohres, die dazu noch mit erheblichen Unwuchten behaftet sein kann, ist es vorteilhaft, wenn das Rohr in der Spannvorrichtung feststeht und das Faswerkzeug bzw. die Faswerkzeuge radial einstellbar an einer koaxial zur Spannvorrichtung drehend angetriebenen Planscheibe ebenso wie die Tastvorrichtung angeordnet ist bzw. sind.

Um das Rohrende eines jeden Rohres stets in derselben Lage bezüglich der Spannvorrichtung einspannen zu können, kann an der Spannvorrichtung ein nach außen wegschwenkbarer Anschlag angeordnet sein.

Dieser Anschlag kann axial begrenzt verschiebbar sein und einen mit dem Anschlag verbundenen Weggeber zum Ermitteln der Ist-Lage der eingespannten Rohrstirnseite mit Bezug auf das Faswerkzeug bzw. die Faswerkzeuge aufweisen. Dies ist vorteilhaft, da sich das Faswerkzeug bzw. die Faswerkzeuge direkt und ohne Sicherheitsabstand schnell an die Bearbeitungsebene heranfahren lassen.

In diesem Fall läßt sich das Anbringen der Fase sowohl unter Berücksichtigung des Verlaufs des Ist-Außen- bzw. -Innendurchmessers oder auch nur, besonders bei dünnwandigen, geschweißten Rohren, des gemessenen Ist-Außen- bzw. -Innendurchmessers durchführen, wobei dies sowohl in einem einzigen Arbeitsgang als auch unter Voranschaltung eines Schruppbearbeitungsganges erfolgen kann.

Damit das Faswerkzeug an der Planscheibe und die Tastvorrichtung nicht durch den schwenkbaren Anschlag beschädigt werden, kann die Planscheibe mit ihrem Antrieb relativ zur Spannvorrichtung vorteilhafterweise axial verschiebbar auf einer Grundplatte angeordnet sein.

Zur Unterstützung eines langen Rohres kann eine zur Spannvorrichtung beabstandete, relativ dazu höheneinstellbare Stützvorrichtung für das Rohr vorgesehen sein.

Zusätzlich können die Spannvorrichtung und die Planscheibe mit ihrem Antrieb auf einem Hubtisch angeordnet sein, wobei die Stützvorrichtung und der Hubtisch je eine Höheneinstellvorrichtung aufweisen, die mittels einer Steuervorrichtung auf gleiche Höhe der Rohrachse im Bereich der Stützvorrichtung und der Spannvorrichtung mit Bezug auf den Soll-Durchmesser des Rohres und die anschließend relativ zueinander nach Ermitteln des Ist-Durchmessers mittels des Weggebers oder der Tastvorrichtung auf eine waagerechte Lage der Achse des eingespannten Rohrendes in Abhängigkeit von dem ermittelten Ist-Durchmesser einstellbar sind.

Die Tastvorrichtung kann als berührend oder als berührungslos arbeitender Kopiertaster ausgebildet sein und mit dem Faswerkzeug in Wirkverbindung stehen, wobei der Kopiertaster entweder mechanisch unmittelbar mit dem Faswerkzeug gekoppelt sein kann oder über die Steuervorrichtung mit dem Faswerkzeug in Wirkverbindung stehen kann.

Der Schruppbearbeitungsgang und der Schlichtbearbeitungsgang lassen sich durch dasselbe Faswerkzeug durchführen, so daß sich diese beiden Bearbeitungsgänge nur durch die Vorschubgeschwindigkeit unterscheiden. Bevorzugt ist jedoch ein an der Planscheibe angeordnetes, radial verstellbares Faswerkzeug für den Schruppbearbeitungsgang und ein versetzt an der Planscheibe angeordnetes, durch die Tastvorrichtung gesteuert radial verstellbares Faswerkzeug für den Schlichtbearbeitungsgang vorgesehen. Diese beiden Faswerkzeuge können radial versetzt an demselben Werkzeughalter oder auf dem Umfang versetzt, vorzugsweise um 180° versetzt, an unterschiedlichen Werkzeughaltern angeordnet sein, die voneinander unabhängige Antriebe zur Radialverstellung aufweisen.

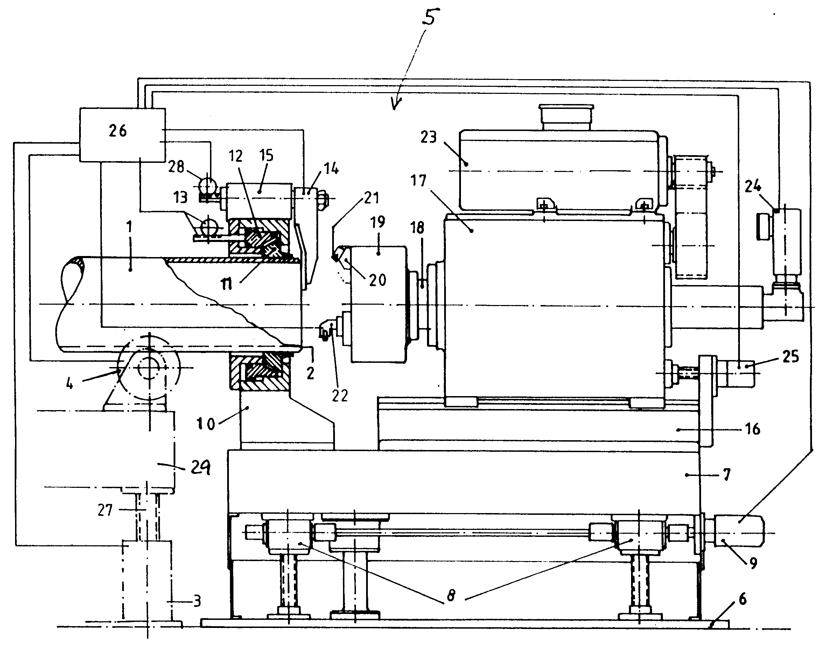

Die Erfindung wird nachstehend anhand eines in der Zeichnung dargestellten Ausführungsbeispiels des näheren erläutert.

Ein Rohr 1, dessen Stirnseite 2 mit einer Fase, z. B. einer Schweißfase, versehen werden soll, liegt mit seinem Außenumfang auf einer Stützrolle 4 auf, die über eine Höheneinstellvorrichtung 27 an einer Rohrstütze 3 gelagert ist, und wird mit ihrem Ende an einer Spannvorrichtung 10 gehalten. Mehrere Stützrollen 4 können entlang eines Trägers 29 oberhalb von mehreren Rohrstützen 3 und Höheneinstellvorrichtungen 27 angeordnet sein, wobei die dargestellte erste Stützrolle 4 zur Spannvorrichtung 10 einen größeren Abstand als dargestellt aufweist. Die Spannvorrichtung 10 ist Teil einer Fasmaschine 5, die auf einem Fundament 6 ebenso wie die Rohrstütze 3 angeordnet ist. Ein Hubtisch 7 stützt sich über Hubvorrichtungen 8 auf dem Fundament 6 ab, wobei sich der Hubtisch 7 mittels einer auf die Hubvorrichtungen 8 wirkenden Antriebseinheit 9 in der Höhe verstellen läßt.

Die am Hubtisch 7 befestigte Spannvorrichtung 10 weist radiale Spannbacken 11 auf, die das Ende des Rohres 1 einspannen, wenn ein Spannkolben 12 axial verschoben wird, so daß sich die Spannbacken 11 aufgrund der zwischen dem Spannkolben 12 und den Spannbacken 11 angeordneten Keilflächen radial gegen das Rohr 1 verspannen. Mit dem Spannkolben 12 ist ein Weggeber 13 verbunden, so daß sich aus der Axialverschiebung des Spannkolbens 12 der Ist-Außendurchmesser des Rohres ermitteln läßt.

Ein Anschlag 14 auf einer Welle 15 ist schwenkbar an der Spannvorrichtung 10 gelagert und wird in den Bereich der Stirnseite 2 des Rohres 1 geschwenkt, wenn ein neues Rohr 1 in die Spannvorrichtung 10 eingeführt wird, um eine Fase anzubringen. Hierzu wird das Rohr 1 mittels einer an der Stützrolle 4 angreifenden Vorschubvorrichtung oder einer direkt am Rohr 1 angreifenden separaten Treibereinheit bis zum Anschlag an den Anschlag 14 bewegt. Danach wird die Spannvorrichtung 10 betätigt, um das Rohrende einzuspannen. Nach dem Einspannen des Rohrendes wird der Anschlag 14 aus dem Bereich der Stirnseite 2 des Rohres 1 herausgeschwenkt. Der Anschlag 14 kann gegen Federkraft begrenzt axial verschiebbar gelagert sein, so daß ein mit der Welle 15 gekuppelter Weggeber eine Lageanzeige der Stirnseite 2 des Rohres 1 mit Bezug auf die Spannvorrichtung 10 liefert.

Ein Getriebegehäuse 17 für eine Spindel 18 mit einer Planscheibe 19 ist axial verschiebbar auf Führungsbahnen 16 des Hubtisches 7 angeordnet. Die Drehachse der Spindel 18 und der Planscheibe 19 liegt koaxial zur Spannvorrichtung 10. An der Planscheibe 19 sind ein oder mehrere radial verstellbare Werkzeughalter 20 für ein Anfaswerkzeug 21 angeordnet.

Bei der dargestellten Ausführungsform ist diametral gegenüber zum Anfaswerkzeug 21 eine Meß- bzw. Tastvorrichtung 22 an der Planscheibe angeordnet und dreht sich somit mit der Planscheibe 19.

Am Getriebegehäuse 17 ist ein Spindelantriebsmotor 23 befestigt, der in bekannter Weise über Keil- oder Zahnriemen und Zahnräder die Spindel 18 mit der Planscheibe 19 in Drehung versetzt und sich auf eine wählbare Drehgeschwindigkeit einstellen läßt. Ein Vorschubantrieb 24 für den Werkzeughalter 20 greift axial in die hohle Spindel 18 ein und setzt seine axiale Bewegung über im einzelnen nicht dargestellte Zwischenelemente in bekannter Weise in eine radiale Vorschubbewegung des Werkzeughalters 20 um. Ein weiterer Vorschubantrieb 25, der am Hubtisch 7 befestigt ist und am Getriebegehäuse 17 angreift, bewirkt die axiale Verschiebung des Getriebegehäuses 17 und damit der Planscheibe 19 mit dem Werkzeughalter 20 und dem Anfaswerkzeug 21.

Eine Steuereinheit 26, vorzugsweise in Form einer CNC-Steuerung, ist über Signal- und Steuerleitungen mit der Spannvorrichtung 10, den Weggebern 13 und 28, einem Schwenkantrieb für den Anschlag 14, dem Antriebsmotor 23 für die Planscheibe 19, dem Vorschubantrieb 24 für den Werkzeughalter 20, dem Vorschubantrieb 25 für die axiale Verschiebung des Getriebegehäuses 17, der Antriebseinheit 9 für den Hubtisch 7, dem Antrieb für die Stützrolle 4 und der Höheneinstellvorrichtung 27 in der Rohrstütze 3 verbunden.

Soll eine Charge von Rohren 1, die mit einem bestimmten Soll-Durchmesser angeliefert werden, mit einer Schweißfase versehen werden, wird jeweils ein Rohr auf die Stützrolle 4 der Rohrstütze 3 aufgelegt und mit der Stirnseite 2 durch die Spannvorrichtung 10 geschoben, bis die Stirnseite 2 an dem Anschlag 14 anliegt. Daraufhin wird mittels der Steuereinheit 26 die Spannvorrichtung 10 betätigt, indem der Spannkolben 12 druckbeaufschlagt und axial verschoben wird. Die Keilflächen zwischen dem Spannkolben 12 und den Spannbacken 11 bewirken, daß sich die Spannbacken 11 radial gegen das Rohrende legen und es einspannen.

Vor dem Einspannen eines Rohres 1 werden die Stützrolle 4 mittels der Höheneinstellvorrichtung 27 und die Spannvorrichtung 10 mittels der Antriebseinheit 9 für die Hubvorrichtung 8 am Hubtisch 7 auf eine Höhe eingestellt, die eine waagerechte Lage der Rohrachse mit Bezug auf den Solldurchmesser des Rohres 1 bewirkt. Diese Höheneinstellung wird durch die Steuereinheit 26 angesteuert. Bei dieser Ansteuerung wird bereits die ggf. vorhandene Durchbiegung des Rohres 1 berücksichtigt, die sich aufgrund des Abstandes zwischen der Spannvorrichtung 10 und der Stützrolle 4 aus dem Eigengewicht des Rohres 1 ergibt. Entscheidend ist, daß die Rohrachse im Bereich der Spannvorrichtung 10 waagerecht verläuft, was bei der Anordnung mehrerer Stützrollen 4 entlang dem Träger 29 ausreichend genau gegeben ist.

Nachdem das Rohr 1 in der Spannvorrichtung 10 eingespannt ist und über den Weggeber 28 die Lage der Stirnseite 2 in der Spannvorrichtung 10 gemessen ist, wird der Anschlag 14 aus dem Bereich der Stirnseite 2 des Rohres 1 weggeschwenkt, so daß sich das Getriebegehäuse 17 mit der Spindel 18, der Planscheibe 19, dem Werkzeughalter 20, dem Anfaswerkzeug 21 und der Meß- bzw. Tastvorrichtung 22 in die Nähe der Stirnseite 2 des Rohres 1 mittels des Vorschubantriebes 25 verfahren läßt. Durch die Steuereinheit 26 wird die Planscheibe 19 in Drehung versetzt, und es wird mittels der Meß- bzw. Tastvorrichtung 22 der Ist-Innendurchmesser und ggf. der Ist-Außendurchmesser des Rohres 1 vermessen, falls dieser nicht über den Weggeber 13, wie bereits erwähnt, ermittelt wurde. Weicht der Ist-Außen- oder Ist-Innendurchmesser des Rohres 1 vom Solldurchmesser ab, ergibt sich daraus eine unterschiedliche Höhenlage der Rohrachse in der Spannvorrichtung 10 und im Bereich der Stützrolle(n) 4, die eine Abweichung der Achsenlage in der Spannvorrichtung 10 von der Waagerechten bewirkt. Durch die Steuereinheit 26 wird daher eine Höhenverstellung des Hubtisches 7 oder der Stützrolle(n) 4 durch Betätigen der Antriebseinheit 9 für die Hubvorrichtung 8 oder der Höheneinstellvorrichtung 27 ausgelöst, die nach Richtung und Größe so bemessen ist, daß die Rohrachse im Bereich der Spannvorrichtung 10 waagerecht liegt, so daß das Anfasen genau senkrecht zur Rohrachse erfolgt.

Gleichzeitig mit dem Messen des Ist-Durchmessers des Rohres 1 läßt sich mittels der Meß- bzw. Tastvorrichtung 22 der Verlauf des Außen- oder Innendurchmessers über den Rohrumfang ermitteln und in der Steuereinheit 26 speichern.

Zum Durchführen des Schruppbearbeitungsganges wird nunmehr, durch die Steuereinheit 26 gesteuert, das Anfaswerkzeug 21 durch radiales Verstellen des Werkzeughalters 20 in den Bereich der Stirnseite 2 gebracht und die Planscheibe 19 wird in eine schnelle Drehung, entsprechend der Bearbeitungsgeschwindigkeit im Schruppbearbeitungsgang, gesetzt. Das Anfaswerkzeug 21 mit dem Werkzeughalter 20 wird radial zugestellt und mit einer Vorschubgeschwindigkeit entsprechend dem Schruppbearbeitungsgang verfahren, bis die erforderliche Bearbeitungszugabe für einen nachfolgenden Schlichtbearbeitungsgang erreicht ist. Diese Bearbeitungszugabe läßt sich aus den über den Rohrumfang ermittelten Werten des Außen- oder Innendurchmessers berechnen und über die Steuereinheit 26 an dem Werkzeughalter 20 durch entsprechendes Verstellen des Vorschubantriebs 24 einstellen.

Ist der Schruppbearbeitungsgang auf diese Weise in der hierfür möglichen, kürzesten Zeit beendet, wird auf den Schlichtarbeitsgang umgeschaltet. Der Schlichtarbeitsgang erfolgt mit einer verringerten Vorschubgeschwindigkeit mit minimaler Zerspanung, um die geforderte Oberflächengüte sowie Lage- und Maßgenauigkeit zu erreichen. Der Schruppbearbeitungsgang und der Schlichtbearbeitungsgang lassen sich mit demselben oder mit unterschiedlichen Werkzeugen durchführen. Da die Fase lage- und maßgenau bezüglich des Außen- oder des Innendurchmessers hergestellt werden soll - für eine Schweißfase muß die Fase lage- und maßgenau gegenüber dem Innendurchmesser des Rohres 1 erstellt werden - wird der Vorschub des Schlichtbearbeitungsganges beendet, wenn das vorgegebene Maß erreicht ist, wobei dieser Schlichtbearbeitungsgang so durchgeführt wird, daß das Anfaswerkzeug 21 am Werkzeughalter 20 entsprechend dem Verlauf des Innendurchmessers, durch die Steuereinheit 26 gesteuert, radial geführt wird. Da das Rohr 1 in der Spannvorrichtung 10 mit seiner Außenfläche eingespannt ist, bedeutet dies, daß die Rohrinnenfläche gegenüber der Rohraußenfläche exzentrisch und unrund laufen kann. Da indessen der Verlauf des Innendurchmessers durch die Meß- bzw. Tastvorrichtung ermittelt und in der Steuereinheit 26 gespeichert wurde, läßt sich der Werkzeughalter 20 mit dem Anfaswerkzeug 21 mittels des Vorschubantriebes 24 genau entsprechend dem Verlauf des Rohrinnendurchmessers nachführen, so daß die Fase lage- und maßgenau bezüglich dieser Rohrinnenfläche erstellt wird.

Die vorbeschriebene Arbeitsweise der erfindungsgemäßen Fasmaschine bezieht sich auf eine alle Einstellungen und Abläufe berücksichtigende CNC-Steuerung mittels der Steuereinheit 26. Es ist möglich, diese CNC-Steuerung zu vereinfachen oder auch ganz darauf zu verzichten.

Um z. B. die Rohrachse im Bereich der Spannvorrichtung 10 waagerecht einzustellen, kann der Ist-Durchmesser des eingespannten Rohres 1 von Hand gemessen werden und entweder die Stützrolle 4 oder der Hubtisch 7 von Hand höhenverstellt werden. Ebenso läßt sich aufgrund des gemessenen Ist-Durchmessers ein Anschlag an der Planscheibe 19 so einstellen, daß das Anfaswerkzeug den Schruppbearbeitungsgang mit einer auf jeden Fall ausreichenden Bearbeitungszugabe für den Schlichtbearbeitungsgang durchführt.

Der Schlichtbearbeitungsgang läßt sich dann mittels eines weiteren, an der Planscheibe 19 angeordneten Anfaswerkzeugs an einem radial verstellbaren Werkzeughalter durchführen, dem eine Tastvorrichtung zugeordnet ist, die an der Rohrinnenwand anliegt, so daß der Schlichtbearbeitungsgang als mechanischer, auf den Innendurchmesser des Rohres bezogener Kopiervorgang abläuft.

Will man nur einen Werkzeughalter 20 verwenden, lassen sich an dem Werkzeughalter 20 zwei radial versetzte Anfaswerkzeuge anordnen, von denen das eine für den Schruppbearbeitungsvorgang und das andere für den Schlichtbearbeitungsvorgang verwendet wird.

Die Tastvorrichtung kann als Kopiervorrichtung, wie bereits erwähnt, direkt mechanisch mit dem Werkzeughalter 20 gekoppelt sein, sie kann jedoch auch berührungslos arbeiten und über die Steuereinheit 26 mit dem Vorschub des Werkzeughalters 20 in Wirkverbindung stehen.

Mit der erfindungsgemäßen Vorrichtung lassen sich somit sowohl mittels einer mechanischen Steuerung als auch mittels einer CNC-Steuerung Rohrenden mit lage- und maßgenauen Fasen versehen, unabhängig davon, ob nahtlose oder geschweißte Rohre angefast werden.

Da die Spannvorrichtung 10 in der Lage ist, erhebliche Spannkräfte aufzubringen, ist es möglich, stark unrunde bzw. ovale Rohre mittels der radial wirkenden Spannbacken 11 in eine praktisch kreisrunde Form zu drücken, was insbesondere bei dünnwandigen, geschweißten Rohren möglich ist, wodurch das Anfasen beschleunigt und vereinfacht wird, da das Anfaswerkzeug 21 keine großen radialen Wege beim Umlauf in Abhängigkeit von dem Rohraußen- oder -innendurchmesser zurückzulegen braucht.

Wenn dieses kreisrund gedrückte Rohr eine im wesentlichen gleichmäßige Wandstärke aufweist, genügt es, den Ist-Außen- oder -Innendurchmesser des Rohrendes zu messen und den Schruppbearbeitungsvorgang und den Schlichtbearbeitungsvorgang in Abhängigkeit von diesem Ist-Durchmesser zu steuern, um die Schweißfase schnell und maß- sowie lagegenau am Rohrende anzubringen. Ist der Spannkolben 12, wie bereits beschrieben, mit einem Weggeber 13 gekuppelt, läßt sich der Weg des Spannkolbens 12 direkt in den Ist-Außendurchmesser des Rohres umrechnen und zum Ansteuern des Faswerkzeugs 21 am Werkzeughalter 20 verwenden. Eine zusätzliche Tastvorrichtung 22 an der Planscheibe 19 ist in diesem Fall nicht mehr erforderlich bzw. braucht nicht, falls sie vorhanden ist, benutzt zu werden.

Die dargestellte Vorrichtung, die sowohl den Weggeber 13 als auch die Tastvorrichtung 22 aufweist, läßt sich somit einerseits zum Anfasen von dünnwandigen Rohren mit gleichmäßiger Wandstärke, insbesondere geschweißten Rohren, die mittels der Spannvorrichtung 10 in eine kreisrunde Form gedrückt werden, verwenden, ohne die Tastvorrichtung 22 zu verwenden, wenn über den Weggeber 13 der Ist-Rohraußendurchmesser ermittelt und das Anfaswerkzeug 21 am Werkzeughalter 20 mittels der Steuervorrichtung 26 entsprechend angesteuert wird. Andererseits läßt sich dieselbe Vorrichtung auch zum Anfasen dickwandiger nahtloser Rohre verwenden, wenn mittels der Tastvorrichtung 22 der Verlauf des Innendurchmessers des Rohres abgetastet und über die Steuervorrichtung 26 zum Ansteuern des Faswerkzeuges 21 am Werkzeughalter 20 benutzt wird. In diesem Fall braucht der Weggeber 13 nicht benutzt zu werden oder kann zum Einstellen des Schruppbearbeitungsgangs benutzt werden, während die Tastvorrichtung 22 nur zum Steuern des Schlichtbearbeitungsgangs eingesetzt wird.

Des weiteren läßt sich das Anfasen beschleunigen und vereinfachen, wenn die Ist-Lage der eingespannten Rohrstirnseite 2 mit Bezug auf das Faswerkzeug 21 bzw. die Faswerkzeuge mittels einer Tastvorrichtung in Form des mit dem Anschlag 14 verbundenen Gebers 28 ermittelt wird. Aufgrund der Ist-Lagebestimmung der eingespannten Rohrstirnseite 2 läßt sich nämlich das Faswerkzeug 21 schnell und genau an die Rohrstirnseite 2 heranfahren und kann dann zumindest den Schruppbearbeitungsgang mit großem Vorschub in Abhängigkeit vom z. B. mittels des Weggebers 13 gemessenen Rohraußendurchmesser durchführen, während der Schlichtbearbeitungsgang in der beschriebenen Weise abhängig vom Verlauf des Innendurchmessers des Rohres unter Benutzung der Tastvorrichtung 22 abläuft. Bei dünnwandigen Rohren mit kleinen Wanddickentoleranzen läßt sich auch der Schlichtbearbeitungsgang ausschließlich in Abhängigkeit vom gemessenen Ist-Außen- oder -Innendurchmesser ausreichend lage- und maßgenau durchführen, ggf. unter Vorschaltung eines schnellen Schruppbearbeitungsganges.

## Patentansprüche

1. Vorrichtung zum mit Bezug auf den Außen- oder Innendurchmesser eines Rohres lage- und maßgenauen Anfasen eines eingespannten Rohrendes mit einer Spannvorrichtung (10) für ein Rohrende, einem oder mehreren relativ zur Spannvorrichtung (10) um die Rohrachse drehbaren, radial einstellbaren Faswerkzeug(en) (21), einer relativ zur Spannvorrichtung (10) um die Rohrachse drehbaren Tastvorrichtung (22) zum Ermitteln des Außen- und/oder Innendurchmessers sowie des Verlaufs des Außen- und/oder Innendurchmessers über den Rohrumfang und einer mit der Tastvorrichtung (22) in Wirkverbindung stehenden Steuervorrichtung (26) zum Einstellen des Faswerkzeugs (21) beim lage- und maßgenauen Erstellen der Fase in Abhängigkeit vom Verlauf des Außen- oder Innendurchmessers, **dadurch gekennzeichnet,** daß die Spannvorrichtung (10) einen axial verschiebbaren, Spannbacken (11) radial spannenden Spannkolben (12) und einen mit dem Spannkolben (12) gekuppelten Weggeber (13) zum Ermitteln des Ist-Außendurchmessers des Rohres (1) aus dem Weg des Spannkolbens (12) aufweist.

2. Vorrichtung nach Anspruch 1, **gekennzeichnet durch** einen in den Bereich der Rohrstirnseite (2) bewegbaren, begrenzt axial verschiebbaren Anschlag (14) und einen mit dem Anschlag (14) verbundenen Weggeber (28) zum Ermitteln der Ist-Lage der eingespannten Rohrstirnseite (2) mit Bezug auf das Faswerkzeug (21) bzw. die Faswerkzeuge.

3. Vorrichtung nach Anspruch 1 oder 2, **dadurch gekennzeichnet,** daß das Faswerkzeug bzw. die Faswerkzeuge (21) radial einstellbar an einer koaxial zur Spannvorrichtung (10) drehend angetriebenen Planscheibe (19) angeordnet ist bzw. sind.

4. Vorrichtung nach Anspruch 3, **dadurch gekennzeichnet,** daß die Tastvorrichtung (22) an der Planscheibe (19) angeordnet ist.

5. Vorrichtung nach Anspruch 3 oder 4, **dadurch gekennzeichnet,** daß die Planscheibe (19) mit ihrem Antrieb relativ zur Spannvorrichtung (10) axial verschiebbar auf einer Grundplatte (7) angeordnet ist.

6. Vorrichtung nach einem oder mehreren der Ansprüche 1 bis 5, **gekennzeichnet durch** eine zur Spannvorrichtung (10) beabstandete, relativ dazu höheneinstellbare Stützvorrichtung (3, 4) für das Rohr.

7. Vorrichtung nach Anspruch 6, **dadurch gekennzeichnet,** daß die Spannvorrichtung (10) und die Planscheibe (19) mit ihrem Antrieb (17, 23) auf einem Hubtisch (7) angeordnet sind.

8. Vorrichtung nach Anspruch 7, **dadurch gekennzeichnet,** daß die Stützvorrichtung (3, 4) und der Hubtisch (7) je eine Höheneinstellvorrichtung (27; 8, 9) aufweisen, die mittels einer Steuervorrichtung (26) auf gleiche Höhe der Rohrachse im Bereich der Stützvorrichtung (3, 4) und der Spannvorrichtung (10) mit Bezug auf den Soll-Durchmesser des Rohres (1) und anschließend relativ zueinander nach Ermitteln des Ist-Durchmessers mittels des Weggebers (13) oder der Tastvorrichtung (22) auf eine waagerechte Lage der Achse des eingespannten Rohrendes in Abhängigkeit von dem ermittelten Ist-Durchmesser einstellbar sind.

9. Vorrichtung nach einem oder mehreren der Ansprüche 1 bis 8, **dadurch gekennzeichnet,** daß die Tastvorrichtung (22) als Kopiertaster ausgebildet ist und mit dem Faswerkzeug (21) in Wirkverbindung steht.

10. Vorrichtung nach Anspruch 9, **gekennzeichnet durch** einen mechanischen, unmittelbar mit dem Faswerkzeug gekoppelten Kopiertaster.

11. Vorrichtung nach Anspruch 9, **gekennzeichnet durch** einen berührend oder berührungslos arbeitenden, über die Steuervorrichtung (26) mit dem Faswerkzeug (21) in Wirkverbindung stehenden Kopiertaster (22).

12. Vorrichtung nach einem oder mehreren der Ansprüche 1 bis 11, **gekennzeichnet durch** ein an der Planscheibe (1) angeordnetes, radial verstellbares Faswerkzeug für den Schruppbearbeitungsgang und ein versetzt an der Planscheibe (19) angeordnetes, durch die Tastvorrichtung (22) gesteuert radial verstellbares Faswerkzeug für den Schlichtbearbeitungsgang.
